# EUROPÄISCHE PATENTSCHRIFT

(11) **EP 2 623 255 B1**
(45) Veröffentlichungstag und Bekanntmachung des Hinweises auf die Patenterteilung: **14.10.2015**
(21) Anmeldenummer: 13154234.2
(22) Anmeldetag: 06.02.2013
(51) Int. Cl.: B23Q 1/01, B23Q 11/00

(54) **Universal-werkzeugmaschine mit Spänesammelraum**
Universal machine tool with chip collection area
Machine-outil universelle avec espace de collecte des copeaux

(30) Priorität: 06.02.2012 DE 102012201736
(43) Veröffentlichungstag der Anmeldung: 07.08.2013
(73) Patentinhaber: DECKEL MAHO Pfronten GmbH, 87459 Pfronten (DE)
(72) Erfinder: Jung, Robert, 87459 Pfronten (DE); Geissler, Alfred, 87459 Pfronten (DE)
(74) Vertreter: MERH-IP Matias Erny Reichl Hoffmann

(56) Entgegenhaltungen:
- EP-A1- 1 186 372
- DE-A1- 10 245 058
- DE-B4- 10 061 934

## Beschreibung

Die Erfindung betrifft eine Universal-Werkzeugmaschine zur spanenden Werkstückbearbeitung, der im Oberbegriff des Patentanspruchs 1 angegebenen Gattung.

### STAND DER TECHNIK

Aus der DE 100 61 934 B4 sowie der DE 102 45 058 A1 sind derartige Werkzeugmaschine bekannt, die sich aufgrund ihrer Bauart durch besondere Steifigkeiten und damit auch hohe Spanleistung sowie hohe Genauigkeit bei der Bearbeitung auszeichnet. Diese Werkzeugmaschine weist einen formsteifen Maschinenständer auf, an dessen Stirnseite eine Arbeitsspindel in Führungsschienen geführt horizontal und vertikal verfahrbar angeordnet ist. Die Universal-Werkzeugmaschine umfasst einen an der Stirnseite des Maschinenständers angeordnetes hochsteifes Maschinenbett, auf dessen Oberseite eine horizontale Linearführung für einen Werkstücktisch angeordnet ist, der mittels eines Linearmotors in einer weiteren Koordinatenachse Z längs des Maschinenbetts verfahren werden kann.

Der Spananfall bei Universal-Werkzeugmaschinen kann vergleichsweise groß sein. Aus diesem Grund sind der Schutz der Maschinenaggregate und -komponenten vor Spanflug sowie die Sammlung und Abfuhr anfallender Späne von jeher ein inhärentes Problem bei der spanenden Metallbearbeitung durch Universal-Werkzeugmaschinen.

Im Stand der Technik wurde daher vorgeschlagen, bei der Konstruktion von Werkzeugmaschinen Spänesammel- und Abfuhrräume vorzusehen. Beispielsweise schlägt die DE 198 30 391 A1 eine Fräsmaschine vor, bei der die Werkzeugspindel in einer Krakarmanordnung verfahrbar geführt ist und sich am rückwärtigen Ende des Maschinentischs in unmittelbarer Nähe der Werkstückaufspannfläche des Werkstücktischs ein in Querrichtung zum Maschinenbett verlaufender Spänesammelraum befindet. Diese Konstruktion ist jedoch für eine horizontal auf dem Maschinenbett in Längsrichtung verfahrbaren Werkstücktisch wenig geeignet, da eine zuverlässige Spänesammlung und -abfuhr in diesem Fall nicht gewährleistet wäre.

Zudem bringt das Vorsehen eines Spänesammelraums konstruktive Beschränkungen, was den grundsätzlichen Aufbau des Maschinengestells und Maschinenständers anbetrifft, mit sich. Ein wichtiger Aspekt liegt hierbei in der Gewährleistung einer ausreichend hohen Steifigkeit sowohl des Maschinenständers als auch des Maschinenbetts.

Ein leistungsstarkes Bearbeitungszentrum, das eine sichere und extrem schnelle Späneentsorgung aus dem Arbeitsraum sicherstellt, ist von der Firma StarragHeckert mit den Bearbeitungszentren CWK 400 D vorgestellt worden. Der Maschinenaufbau dieses Bearbeitungszentrums in Kreuzbettbauweise mit Schrägbett ist jedoch verhältnismäßig aufwendig und vergleichsweise wenig kompakt.

Aus der DE 10 2007 044 289 A1 ist eine Werkzeugmaschine bekannt, in deren Maschinenbett ein Spänesammelraum vorgesehen ist. Die Werkzeugmaschine umfasst zudem eine Abführeinrichtung zur Entfernung der Späne aus dem Sammelraum, die wiederrum eine Fördereinrichtung aufweist, die auf einem zweiten Maschinenbettabschnitt platziert ist.

Die EP 1477 267 A2 offenbart eine Werkzeugmaschine in Portal-Bauweise, umfassend ein Maschinenbett, eine Tragsäule, untere und obere Führungen, untere und obere Linearmotormagnete, sowie untere und obere Linearmotorspulen für den Antrieb in X-Richtung, die sich durch die besondere Anordnung der unteren und oberen Führung und der unteren und oberen Linearmotormagneten auszeichnet.

Auch aus der DE 20 2007 013 009 U1 ist eine Werkzeugmaschine in Portal-Bauweise bekannt, die sich durch einen besonderen Aufbau des Schlittenträgers mit Gewindespindel- und Statorträgerabschnitten auszeichnet.

Die WO 2008/050024 A1 zeigt eine Werkzeugmaschine in Gantry-Bauweise.

Aufgabe der vorliegenden Erfindung ist es daher, eine möglichst kompakte Universal-Werkzeugmaschine des gattungsgemäßen Typs anzugeben, die hinsichtlich der Sammlung und Abfuhr von anfallendem Span verbessert ist, ohne Einbußen hinsichtlich der Steifigkeit des Maschinengestells

Diese Aufgabe wird gelöst durch eine Universal-Werkzeugmaschine gemäß Patentanspruch 1. Die abhängigen Patentansprüche sind auf vorteilhafte Ausgestaltungen der Erfindung gerichtet.

Die erfindungsgemäße Universal-Werkzeugmaschine weist einen formsteifen Maschinenständer auf, an dem eine in Führungen entlang zweier Koordinatenachsen X und Y motorisch verfahrbare Arbeitsspindel zur Aufnahme eines Bearbeitungswerkzeugs geführt wird. An der Stirnseite des Maschinenständers ist ein Maschinenbett angeschlossen, auf dessen Oberseite eine horizontale Linearführung für einen Werkstücktisch vorgesehen ist sowie ein Linearmotor zum Verfahren eines Werkstücktischs in der horizontalen Linearführung mit einer weiteren Koordinatenachse.

Erfindungsgemäß ist in das bzw. auf dem Maschinenbett ein kanalförmiger Späneraum zur Sammlung von bei der Bearbeitung des Werkstücks anfallendem Span vorgesehen, dessen Längsachse sich in horizontaler Richtung längs des Maschinenbetts erstreckt, wobei der Linearmotor auf der Oberseite des Maschinenbetts seitlich parallel zu dem kanalförmigen Späneraum angeordnet ist. Eine erste und eine zweite Führungsschiene der horizontalen Linearführung zur Führung des Werkstücktischs sind auf gegenüberliegenden Seiten des Linearmotors angeordnet, d.h. der Linearmotor befindet sich zwischen zwei seitlich auf der Oberseite des Maschinenbetts neben dem Linearmotor angeordneten Führungsschienen der horizontalen Linearführung.

Die Anordnung eines kanalförmigen Späneraums in Längsrichtung des Maschinenbetts ermöglicht eine verbesserte Sammlung und Abfuhr der bei der Werkstückbearbeitung anfallenden Späne, ohne dass die Stabilität des Maschinenbetts beeinträchtigt wird.

Die Anordnung des Linearmotors für den Werkstücktisch seitlich neben dem Spänekanal gewährleistet einen effizienten Schutz vor anfallendem Spanflug. Darüber hinaus ergibt sich aus der erfindungsgemäßen Anordnung des Linearmotors und des kanalförmigen Späneraums in Verbindung mit der Anordnung der Führungsschienen beidseitig des Linearmotors eine optimale Positionierbarkeit verschiedener Werkstücktische bei der erfindungsgemäßen Universal-Werkzeugmaschine.

Dabei kann auf der ersten und der zweiten Führungsschiene ein drehbarer Rundtisch, vorteilhafterweise über Kugel- oder Rollenumlaufschuhe, geführt werden.

Bei einer vorteilhaften Ausgestaltung weist die erfindungsgemäße Maschinenstruktur hierzu eine dritte Führungsschiene auf, die in Bezug auf die erste Führungsschiene auf einer gegenüberliegenden Seite des kanalförmigen Späneraums angeordnet ist, so dass die Unterseite eines NC-Rundtisch tragenden Tischschlittens, der entlang der drei Führungsschienen geführt wird, den Kanal übergreift und bei Antrieb des Linearmotors direkt oberhalb des Kanals entlang seiner gesamten Längserstreckung verfahren wird. Diese Anordnung ermöglicht eine optimale Spänesammlung bei Bearbeitung eines auf dem NC-Rundtisch aufgespannten Werkstücks.

Bei einer alternativen Ausgestaltung kann die Universal-Werkzeugmaschine zur 5-Achsbearbeitung mit einem Schwenkrundtisch bestückt sein, der vorteilhafterweise ebenfalls über Kugel- oder Rollenumlaufschuhe auf der ersten und zweiten Führungsschiene geführt wird, wobei die Unterseite des Tischschlittens den Linearmotor überdeckt.

Vorteilhafterweise ist der Schwenkrundtisch mit einer Schwenkachse ausgestattet, die einen Schwenkwinkel von >180°, vorzugsweise bis 220°, ermöglicht, so dass der Werkzeugtisch in einer Kopfüberstellung verfahren werden kann, in der ein auf dem Werkstücktisch aufgespanntes Werkstück durch die Arbeitsspindel bearbeitet werden kann, wobei ein direkter Spänefall in den kanalförmigen Spänesammelraum realisiert wird.

Der kanalförmige Späneraum eines bevorzugten Ausführungsbeispiels ist in die Oberseite des Maschinenbetts eingebaut und weist zu einem Bodenbereich hin steil abfallende Seitenwände auf. Zudem sind direkt an dem Tisch winkelförmige Bleche befestigt, die nach unten hin in den kanalförmigen Späneraum hineinragen und auf diese Weise sicherstellen, dass der anfallende Span direkt in den in den Späneraum geleitet wird.

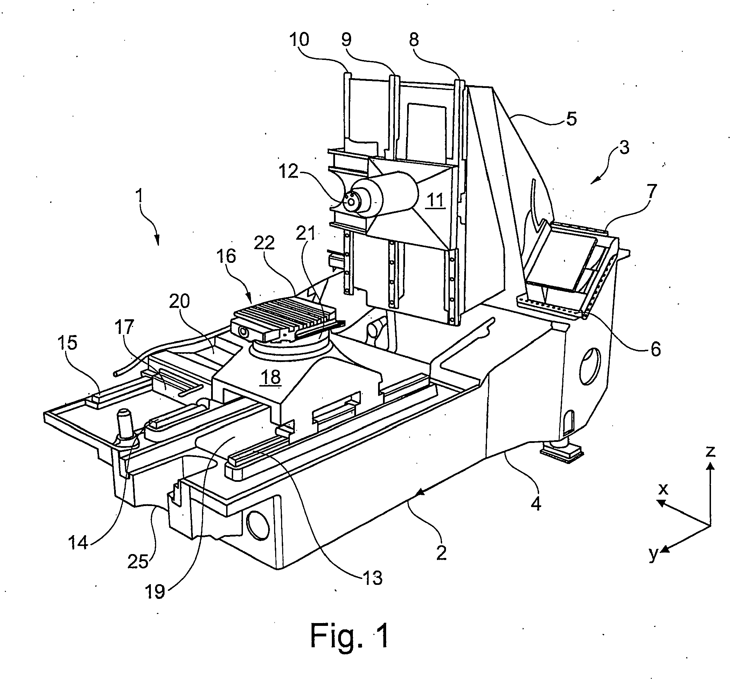

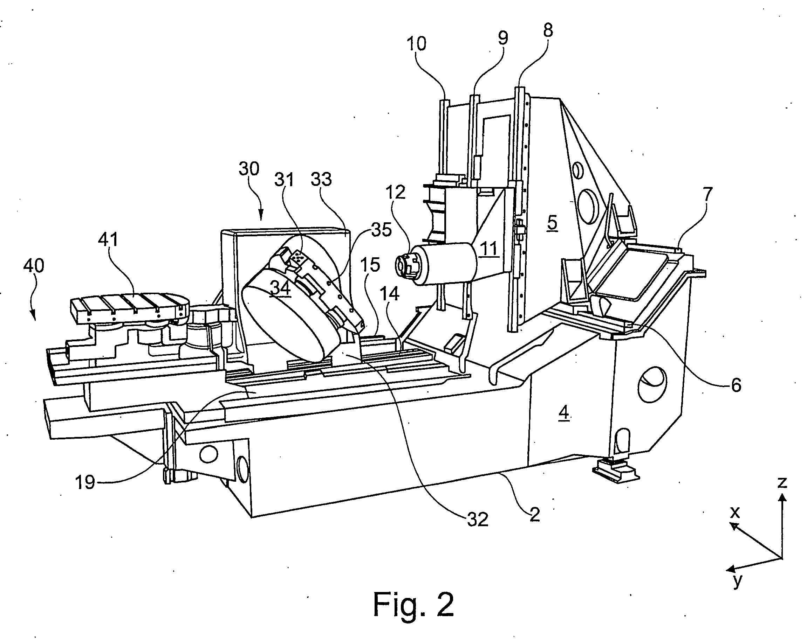

Bei einem bevorzugten Ausführungsbeispiel erstreckt sich der kanalförmige Späneraum mittig innerhalb des Maschinenbetts entlang der in den Fig. 1 und 2 gezeigten Z-Achse.

Vorteilhafterweise ist am Boden des kanalförmigen Späneraums in horizontaler Richtung eine Späneschnecke 50 zur Abfuhr von in dem Späneraum befindlichen Span vorgesehen.

Der erfindungsgemäße Aufbau des Maschinenbetts der Universal-Werkzeugmaschine ist besonders vorteilhaft bei einem Fahrständer-Bett-Aufbau der Universal-Werkzeugmaschine, da hier die für die Präzisionsbearbeitung notwendige Maschinenstabilität sicher gewährleistet ist.

Bei einer besonders stabilen Ausführung der erfindungsgemäßen Werkzeugmaschine zur spanenden Werkstückbearbeitung sind an dem Maschinenständer drei vertikale zueinander parallele Führungen vorgesehen entlang derer die Arbeitsspindel geführt ist, wobei die mittlere Führung die Belastung trägt, die durch die magnetischen Kraft eines Linearmotors, der zum Verfahren der Arbeitsspindel in vertikaler Richtung vorgesehen ist, erzeugt wird. Auf diese Weise kann die Stabilität der Maschinenkonstruktion im Bereich des Fahrständers weiter verbessert werden, ohne die zur Stabilität beitragenden Massen erhöhen zu müssen. Dies ist überraschender Weise insbesondere vorteilhaft bei Werkzeugmaschinen in Fahrständer-Bett-Ausführung der Fall, bei denen der Fahrständer als dreieckige geschlossene Kastenkonstruktion ausgeführt ist, wie z.B. in der eingangs beschriebenen DE 102 45 058 A1, da bei einer Maschinenausführung dieses Typs die Stabilität beim Verfahren der Hochgeschwindigkeitsspindel hierdurch besonders erhöht wird.

Das erfindungsgemäße Konzept zum Aufbau des Maschinenbetts ermöglicht eine optimale Abfuhr von Bearbeitungsspan für Konfigurationen mit NC-Rundtischen wie auch für Werkzeugmaschinen mit Schwenkrundtisch zur 5-Achsbearbeitung, ohne dass hierzu weitere konstruktive Modifikationen an der Maschine vorgenommen werden müssten. Vielmehr kann der erfindungsgemäße Grundaufbau je nach Anforderungsbedingungen oder Kundenwunsch ohne weitere Modifikation sowohl mit einem NC-Rundtisch als auch mit einem Schwenkrundtisch realisiert werden, wobei in beiden Fällen eine sichere Spanabfuhr über den gesamten Verfahrensweg des jeweiligen Werkstücktischs gewährleistet ist.

Weitergehende Einzelheiten und Vorteile der vorliegenden Erfindung werden anhand der nachfolgenden Beschreibung von Ausführungsbeispielen der erfindungsgemäßen Universal-Werkzeugmaschine mit Späneraum anhand der Zeichnungen deutlich.

Es zeigen:
- **Fig. 1**: ein erstes Ausführungsbeispiel einer erfindungsgemäßen Universal-Werkzeugmaschine mit NC-Drehtisch in perspektivischer Darstellung;
- **Fig. 2**: ein weiteres Ausführungsbeispiel einer erfindungsgemäßen Universal-Werkzeugmaschine mit Späneraum, auf der ein Schwenkrundtisch montiert ist, in perspektivischer Darstellung;
- **Fig. 3**: ein Ausführungsbeispiel einer erfindungsgemäßen Universal-Werkzeugmaschine mit Späneraum und NC-Drehtisch, wie in Fig. 1 gezeigt, im Querschnitt;
- **Fig. 4**: ein Ausführungsbeispiel einer erfindungsgemäßen Universal-Werkzeugmaschine mit Späneraum und Schwenkrundtisch, wie in Fig. 2 gezeigt, im Querschnitt;
- **Fig. 5**: ein Ausführungsbeispiel eines Schwenkrundtisches zur Montage auf einer erfindungsgemäßen Universal-Werkzeugmaschine in perspektiver Darstellung; und
- **Fig. 6**: eine schematische Darstellung einer erfindungsgemäßen Universal-Werkzeugmaschine mit Schwenkrundtisch zur Veranschaulichung des Schwenkbereichs.

Ein erstes Ausführungsbeispiel einer erfindungsgemäßen Universal-Werkzeugmaschine mit NC-Rundtisch ist in Fig. 1 in schräger Vorderansicht perspektivisch dargestellt. Die in Fahrständer-Bett-Bauweise ausgeführte Universal-Werkzeugmaschine besteht aus einem vorderen als Kastenkonstruktion ausgeführten Maschinenbett 2 und einem rückwärtigem ortsfesten Fahrständer 3, an dessen Stirnseite das kastenförmige Maschinenbett 2 angeschlossen ist. Bei dieser Ausführungsform nach Fig. 1 ist der Ständer zweiteilig ausgebildet mit einem Unterteil 4, das mit dem Maschinenbett 2 fest verbunden ist, und einem Fahrständerteil 5, der in zwei Führungsschienen 6 und 7 mittels eines Linearmotors in X-Richtung verfahrbar ist. Der Fahrständerteil 5 weist eine Frontseite mit drei vertikalen Führungsschienen 8, 9, 10, auf, auf denen ein Vertikalschlitten 11 mit Spindelkopf 12 zur Aufnahme eines Bearbeitungswerkzeugs mittels eines Linearmotors 70 verfahrbar angeordnet ist. Dabei trägt die mittlere Führungsschiene 9 die Last des magnetischen Antriebs. Das Maschinenbett ist über die beiden Auflager 2a, 2b zum Boden hin abgestützt.

Auf der Oberseite des kastenförmigen Maschinenbetts 2 sind drei Führungsschienen 13, 14, 15 einer horizontalen Linearführung angebracht, auf denen ein Werkstücktisch 16 mittels eines Linearmotors in Z-Richtung verfahrbar geführt wird. Der (in Fig. 1 nicht gezeigte) Linearmotor zum Verfahren des Tischschlittens ist dabei zwischen den Führungsschienen 14, 15 angeordnet und nach oben hin durch eine Abdeckung 20 geschützt.

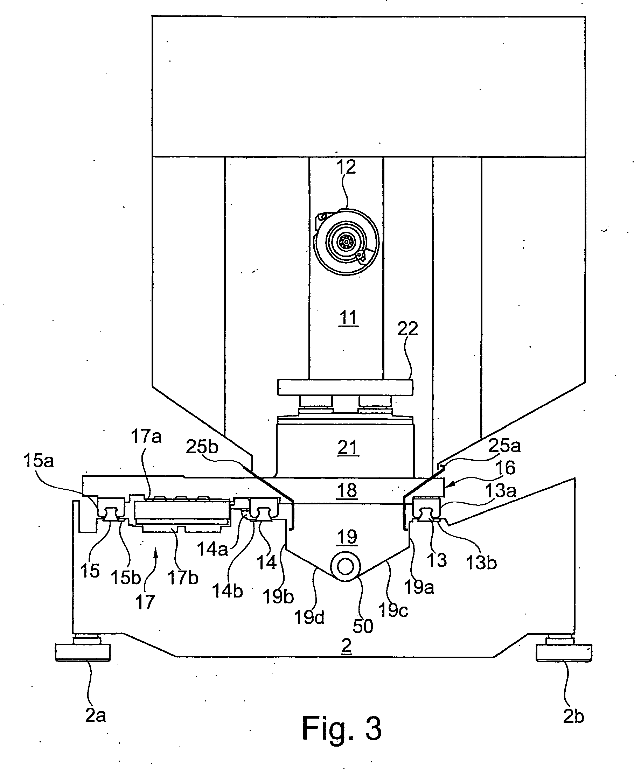

Ein Tischschlitten 18 trägt einen NC-Rundtisch 21, dessen Oberseite eine Palette 22 trägt, die zum Aufspannen eines (nicht dargestellten) Werkstücks geeignet ist. Die Unterseite des Tischschlittens 18 ist dabei direkt über einem kanalförmigen Späneraum 19 verfahrbar angeordnet, dessen Struktur genauer anhand der Fig. 3 ersichtlich ist.

Im vorderen Bereich des Maschinenbetts ist eine Ausnehmung in Form eines U-Profils 25 in das Maschinenbett 2 eingebracht, was den Anschluss eines (in Fig. 1 nicht dargestellten) Palettenwechslers ermöglicht. Die räumliche Anordnung des kanalförmigen Späneraums 19, der sich direkt an dem U-förmigen Wandabschnitt des Maschinenbetts anschließt, lässt eine optimale Raumausnutzung bei dem erfindungsgemäßen Aufbau des Maschinenbetts zu, so dass die Universal-Werkzeugmaschine auch als Bearbeitungszentrum mit Palettenwechsler kompakt ausgestaltet ist.

Fig. 2 zeigt ein weiteres Ausführungsbeispiel einer erfindungsgemäßen Universal-Werkzeugmaschine in schräger Vorderansicht, die sich von dem in Fig. 1 gezeigten Ausführungsbeispiel dadurch unterscheidet, dass das Maschinenbett 2 bei diesem Ausführungsbeispiel einen Schwenkrundtisch 30 trägt und zudem am vorderen Bereich des Maschinenbetts 2 ein Palettenwechsler 40 angeschlossen ist mit einer Wechselpalette 41 zum Austausch gegen die auf dem Schwenkrundtisch 30 getragene Palette 31.

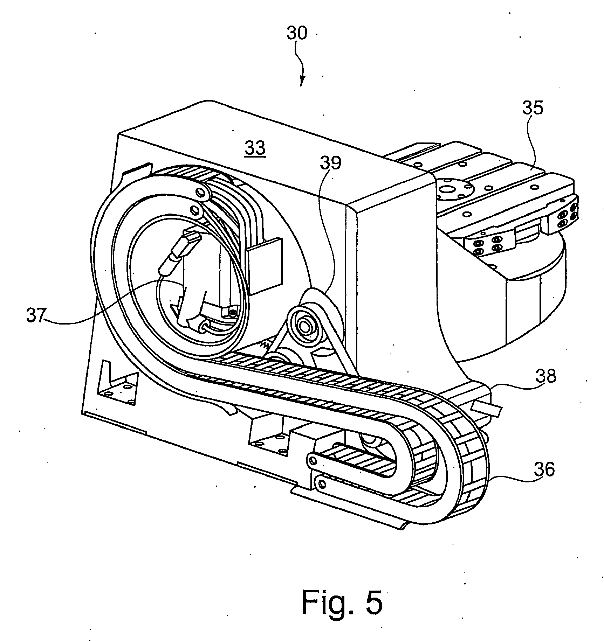

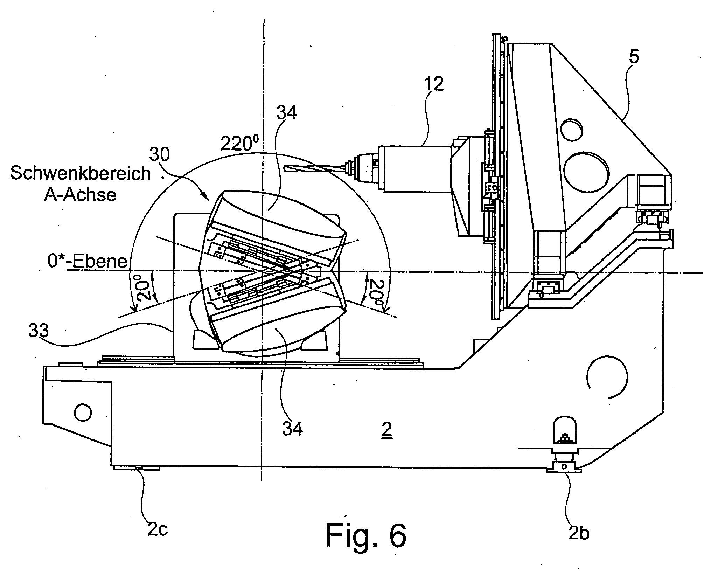

Der Schwenkrundtisch 30 umfasst ein unteres Schlittenteil 32, das auf den Führungsschienen 14, 15 geführt ist, das ein kastenförmiges Tischgehäuse 33 trägt. In bzw. an dem kastenförmigen Gehäuse 33 ist ein Antriebsmotor zum Verschwenken der Konsole 34 des Maschinentischs an- bzw. untergebracht, mittels dessen die Arbeitsebene des Werkstücktischs rotiert werden kann, wie später unter Bezugnahme auf die Fig. 5 und 6 genauer erläutert wird. Mittels der Schwenkachse kann die Arbeitsebene der Werkstücktischs 34 über Verschwenken der Konsole 34 in eine Überkopfstellung gebracht werden, die in Fig. 6 veranschaulicht ist, wodurch die Arbeitsebene 35 des kopfüber geschwenkten Werkstücktischs direkt oberhalb des Spänekanals 19 positioniert werden kann.

Am vorderen Kopfende des Maschinenbetts 2 ist ein Palettenwechsler 40 angeschlossen, der in die in Fig. 1 gezeigte U-profilförmige Ausnehmung eingefügt wird. Die Kompaktheit resultiert hierbei vor allem daraus, dass der Palettenwechsler direkt in einen Abschnitt des Maschinenbetts angeschlossen werden kann, der an den kanalförmigen Späneraum angrenzt, so dass einerseits gewährleistet ist, dass der Palettenwechsler beim Wechselvorgang der Palette nur kurze Verfahrwege zurücklegen muss, und andererseits, dass der Werkstücktisch auch in der Grundwechselstellung des Palettenwechslers bereits direkt über dem kanalförmigen Späneraum angeordnet ist.

Fig. 3 zeigt einen Querschnitt durch das Maschinenbett 2 des Ausführungsbeispiels der Fig. 1, aus welchem die Struktur des kanalförmigen Späneraums 19 im Maschinenbett 2 genauer ersichtlich wird.

Der Spänekanal 19 wird durch zwei nahezu vertikal abfallende Seitenwände 19a, 19b gebildet. Der Bodenbereich des Kanals wird durch die leicht schräg verlaufenden Bodenabschnitte 19c, 19d gebildet. Im Bereich des tiefsten Punkts am Boden des Kanals 19 ist eine Förderschnecke 50 vorgesehen, die dem Abtransport des anfallenden Spans dient. Winkelförmige Leitbleche 25a, 25b sind an dem Werkstücktisch befestigt und gewährleisten, dass der bei der Bearbeitung eines auf der Palette 22 gespannten Werkstücks anfallender Span direkt in den kanalförmigen Späneraum eingetragen wird und dadurch insbesondere eine Verschmutzung der horizontalen Linearführung und des Linearmotors 17 verhindert wird. Diese winkelförmigen Leitbleche 25a, 25b die in Längsrichtung des Maschinenbetts vorteilhafterweise vor- und hinterseitig des Werkstücktischs angebracht sind verfahren beim an dem vorderen Ende des Maschinenbetts in eine Ausnehmung des Palettenwechslers bzw des ihn aufnehmenden Abschnitts des Maschinenbetts und am hinteren Ende in eine in der Stirnfläche des Fahrständer zu diesem Zwecke ausgebildete Aussparung hinein, sodass die Verfahrweg des Tischs durch die Leitbleche nicht eingeschränkt wird.

Der Werkstücktisch 16 weist unterseitig einen Tischschlitten 18 auf, an dessen Unterseite Rollenumlaufschuhe 13a, 14a, 15a montiert sind, die auf den Profilschienen 13, 14, 15 geführt werden. Der Tischschlitten 18 ist mittels des Linearmotors 17 in der in Fig. 1 gezeigten Z-Richtung verfahrbar, wobei der Linearmotor-Primärteil 17a mit der Konsole des Tischschlittens 18 verbunden ist und längs des Linearmotor-Sekundärteils 17b, das auf Magnetbahnsegmenten gebildet ist, entlanggeführt wird. Vorteilhaft ist dabei, dass das Linearmotor-Primärteil 17a sowie das Linearmotor-Sekundärteil 17b in Breitenrichtung zwischen den Profilschienen 14, 15 angeordnet sind und parallel zu dem kanalförmigen Späneraum 19 verlaufen, der sich wiederum entlang der gesamten Länge der Linearführungsschienen 13, 14, 15 parallel zu diesen erstreckt.

An den Profilschienen sind vorteilhafterweise thermosymetrische Linearmaßstäbe 13b, 14b, 15b vorgesehen, die erheblich zur Genauigkeit der Positionsbestimmung des Werkstücktischs beitragen.

Der Tischschlitten 18 trägt ein zylindrisches Mittelteil 21, auf dessen Oberseite eine Werkstückpalette 22 getragen wird, auf der über geeignete Spannmittel ein Werkstück aufgespannt werden kann. Wie aus der Darstellung der Fig. 3 ersichtlich wird, übergreift der Tischschlitten 18 den kanalförmigen Späneraum in Breitenrichtung, wobei die Oberseite des Werkstücktischs 16, auf der das (nicht dargestellte) Werkstück aufgespannt wird, direkt oberhalb des Kanals und in dessen gesamter Länge in Y-Richtung verfahrbar angeordnet ist.

Durch die Führung des NC-Rundtischs in den drei Führungsschienen 13, 14, 15 wird eine verbesserte Stabilität der Führung erreicht. Gleichzeitig ist ein optimaler Schutz des Linearmotors vor anfallendem Span durch seitlichen Versatz des Linearmotors gegenüber der Ebene des kanalförmigen Späneraums bzw. der Verfahrebene des NC-Tischs gegeben. Zudem ermöglicht die erfindungsgemäße Struktur des Maschinenbetts eine optimale Kombination der Werkzeugmaschine mit einem Späneförderer.

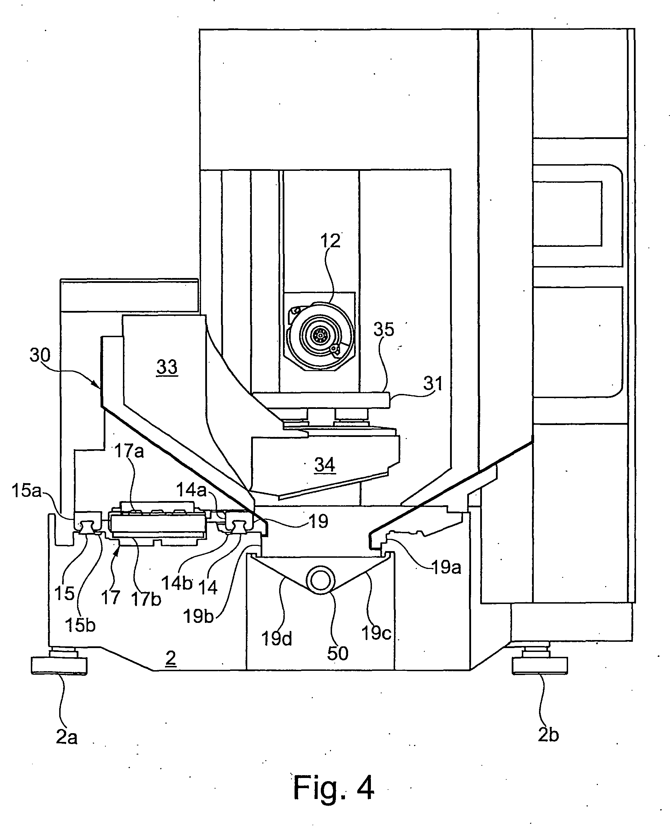

Ein Querschnitt durch eine erfindungsgemäße Universal-Werkzeugmaschine, wie sie im Ausführungsbeispiel der Fig. 2 gezeigt ist, wird nachfolgend anhand der Fig. 4 erläutert. Gleiche Bezugszeichen wie in den Fig. 2 und 3 bezeichnen ohne gesonderte Erwähnung entsprechende Teile.

Bei dem in Fig. 4 veranschaulichten Beispiel ist auf der erfindungsgemäßen Universal-Werkzeugmaschine ein fliegend gelagerter Schwenkrundtisch 30 montiert, der über Rollenumlaufschuhe 14a, 15a, die auf der Unterseite des Tischgehäuses 33 montiert sind, in den Profilschienen 14, 15 der horizontalen Linearführung geführt wird. Der Antrieb zum Verfahren des Schwenkrundtischs 30 in Z-Richtung erfolgt über den Linearmotor 17, der zwischen den Führungsschienen 14, 15 angeordnet ist, wobei das in einem Querschnitt horizontal ausgerichtete Linearmotor-Primärteil 17a an der Unterseite des Gehäuses 33 des Schwenkrundtischs 30 montiert ist und entlang des Linearmotor-Sekundärteils 17b bewegt wird. Ebenso wie beim Ausführungsbeispiel der Fig. 1/3 und wie in Fig. 2 veranschaulicht, erstreckt sich der kanalförmige Späneraum entlang der gesamten Länge der Führungsschienen 14, 15, so dass in jeder Arbeitsposition des in Z-Richtung verfahrbaren Schwenkrundtischs 30 ein sicherer Eintrag des anfallenden Spans in den Späneraum gewährleistet ist.

Dabei ist in der Grundstellung des Schwenkrundtischs die Arbeitsfläche zum Aufspannen des Werkstücks auf dem Werkstücktisch35 horizontal auf der auskragenden Konsole 34 ausgerichtet und unterhalb der Arbeitsspindel 12 angeordnet. Mittels einer in Fig. 4 nicht dargestellten Schwenkachse kann die Konsole 34 des Schwenkrundtischs 30 jedoch um eine horizontale Papierebene liegende Schwenkachse nach oben verschwenkt werden, so dass in einer Kopfüberstellung die Oberfläche 35 des Schwenkrundtischs, auf der das Werkstück aufgespannt wird, oberhalb der Arbeitsspindel angeordnet ist.

Durch die erfindungsgemäße Anordnung und Verfahrbarkeit des Schwenkrundtischs über den kanalförmigen Späneraum in jeder beliebigen Schwenkstellung des Werkstücktischs wird ein optimaler Abtransport des anfallenden Spans in den Späneraum in jeder Arbeitsstellung der Arbeitsspindel und des Schwenkrundtischs gewährleistet.

Auch bei diesem Ausführungsbeispiel weist der kanalförmige Späneraum nahezu vertikale Seitenwände 19a, 19b auf, an die sich ein Bodenbereich mit den geneigten Bodenabschnitten 19c, 19d anschließt. Ebenso wie bei dem vorhergehenden Ausführungsbeispiel ist bei dem Ausführungsbeispiel der Fig. 4 am tiefsten Punkt des Bodens des kanalförmigen Späneraums eine Späneschnecke 50 vorgesehen, die der Abfuhr des anfallenden Spans dient.

Bei der erfindungsgemäßen Anordnung der Führungsschienen, des Linearmotors sowie des kanalförmigen Späneraums im Maschinenbett der Universal-Werkzeugmaschine insbesondere in Fahrständer-Bett-Ausführung ist gewährleistet, dass sowohl bei der Verwendung eines NC-Rundtischs als auch bei der Verwendung eines Schwenkrundtischs die Werkstücktischoberseite direkt über dem kanalförmigen Späneraum verfahren wird, wodurch ein optimaler Spanabtransport in jeder Arbeitsstellung gewährleistet wird. Durch die steil nach unten abfallenden Seitenwände des kanalförmigen Späneraums in Verbindung mit den seitlich angeordneten Leitblechen ist ein optimales Sammeln des Spans gesichert, was insbesondere für die Trockenbearbeitung an der Werkzeugmaschine eine wichtige Rolle spielt.

Fig. 5 zeigt Einzelheiten einer bevorzugten Ausführungsform eines Schwenkrundtischs zur Verwendung mit dem erfindungsgemäßen Maschinenaufbau. Dabei ist zu beachten, dass der in Fig. 5 gezeigte Schwenkrundtisch nicht auf eine Verwendung mit dem erfindungsgemäßen Maschinenaufbau begrenzt ist, sondern auch bei herkömmlichen Werkzeugmaschinen Verwendung finden kann.

Aus diesem Grund kann für die zentralen Merkmale dieses Schwenkrundtischs separat Schutz begehrt werden.

Der Schwenkrundtisch umfasst zwei Elektromotoren 37 und, 38 zum Drehen und Verschwenken des Tischs 30 um eine in Fig. 6 gezeigte A-Achse. Dabei ist der Motor 38 außerhalb des Gehäuses 33 an dessen Außenseite angebracht und der Motor 37 zentral innerhalb des Gehäuses Erfindungsgemäß ist dabei mindestens einer der Motoren 37, 38, vorzugswiese beide Motoren, wie bei dem in Fig. 5 gezeigten Schwenkrundtisch, im Bereich des Gehäuses 34 außerhalb der Maschinengussteile angeordnet. Dies bringt den Vorteil mit sich, dass sie zum einen gut zugänglich sind, was für die Reparatur oder den Austausch nützlich ist, und sie darüber hinaus außerhalb der Wärmeeinflusszone, d.h. im temperaturneutralen Teil und nicht im fliegenden Teil angeordnet sind, so dass ihre Funktion nicht durch Wärmeübertragung durch Gussteile beeinträchtigt wird. Darüber hinaus sind die nicht im fliegenden Teil der Konsole 34 des Schwenkrundtischs angeordneten Motoren 37, 38 keiner Gewichtsbelastung ausgesetzt, was zusätzlich zur Genauigkeit bei der Positionierung beiträgt.

Rückseitig ist an dem Tischgehäuse 33 eine Energiekette zur Leitung von elektrischen Versorgungskabeln zu dem Motor 37 angebracht, was eine effiziente und sichere Kabelführung zum Betrieb der Motoren beim Verfahren des Schwenkrundtischs 30 gewährleistet. Das Antriebsmoment des Motors 38 zum Verschwenken der Konsole wird über einen Keilriemen an das Getriebe 39 übertragen.

Fig. 6 veranschaulicht den Schwenkbereich des erfindungsgemäßen Schwenkrundtischs zur Verwendung mit dem erfindungsgemäßen Maschinenaufbau. Die Darstellung verdeutlicht, dass die Schwenkachse (A-Achse) ein Verschwenken der Arbeitsebene 35 des Werkzeugtischs um bis 220° ermöglicht, was eine optimale 5-Achsbearbeitung zulässt.

Aufgrund dieses Schwenkbereichs ist eine optimale Bearbeitung von Werkstücken in einer Kopfüberstellung möglich, wobei durch die Verbindung des erfindungsgemäßen Schwenkrundtischs und des erfindungsgemäßen Maschinenaufbaus eine sichere Abfuhr des anfallenden Spans über den kanalförmigen Späneraum gesichert ist.

Ein weiteres Kennzeichen des erfindungsgemäßen Schwenkrundtischs sind die erzielbaren Beschleunigung- bzw. Geschwindigkeitswerte, die für die A-Achse 20/S² bzw. 20 Minuten⁻¹ und für die Drehachse 30/S² und 40 Minuten⁻¹ betragen können.

Die Erfindung ist nicht auf die vorgestellten Ausführungsbeispiele beschränkt, sondern umfasst weitere Kombinationen der in dieser Beschreibung vorgestellten konstruktiven Einzelheiten zur Schaffung weiterer Ausführungsbeispiele gemäß der beigefügten Ansprüchen.

## Patentansprüche

1. Werkzeugmaschine zur spanenden Werkstückbearbeitung mit
einem formsteifen Maschinenständer,
einer in Führungen (6-10) an dem Maschinenständer in zwei Koordinatenachsen (X, Z) motorisch verfahrbaren Arbeitsspindel (12) zur Aufnahme eines Bearbeitungswerkzeugs,
einem an der Stirnseite des Maschinenständers (5) angeordneten Maschinenbett (2), auf dessen Oberseite eine horizontale Linearführung (13-15) für einen Werkstücktisch (16) angeordnet ist, und
einem Linearmotor (17) zum Verfahren eines Werkstücktischs (16) in der horizontalen Linearführung (13-15) in einer weiteren Koordinatenachse (Y), wobei
in die Oberseite des Maschinenbetts (2) ein kanalförmiger Späneraum (19) zur Sammlung von bei der Bearbeitung des Werkstücks anfallender Späne integriert ist, dessen Längsachse sich in Richtung der weiteren Koordinatenachse (Y) erstreckt, **dadurch gekennzeichnet dass** der Linearmotor (17) auf der Oberseite des Maschinenbetts (2) seitlich parallel zu dem kanalförmigen Späneraum (19) angeordnet ist, wobei
eine erste Führungsschiene (14) der horizontalen Linearführung (13-15) zur Führung des Werkstücktischs auf einer ersten Seite des Linearmotors (17) angeordnet ist,
eine zweite Führungsschiene (15) der horizontalen Linearführung (13-15) zur Führung des Werkstücktischs auf einer der ersten Seite des Linearmotors (17) gegenüberliegenden zweiten Seite des Linearmotors angeordnet ist, und
die erste und die zweite Führungsschiene (14, 15) auf einer ersten Seite des kanalförmigen Späneraums (19) angeordnet sind.

2. Werkzeugmaschine zur spanenden Werkstückbearbeitung nach Patentanspruch 1,
**dadurch gekennzeichnet dass**
auf der Oberseite des Maschinenbetts eine dritte Führungsschiene (13) der horizontalen Linearführung auf der in Bezug auf die anderen beiden Führungsschienen (14, 15) gegenüberliegenden Seite des kanalförmigen Späneraums (19) angeordnet ist.

3. Werkzeugmaschine zur spanenden Werkstückbearbeitung nach Patentanspruch 2,
**dadurch gekennzeichnet dass**
die Werkzeugmaschine einen verfahrbaren NC-Rundtisch (16) umfasst, dessen Schlitten (18) über Führungsschuhe (13a-15a) auf den drei Führungsschienen (13-15) der horizontalen Linearführung geführt ist und den Späneraum (19) in Breitenrichtung übergreift, sodass der NC-Rundtisch durch den Linearmotor (17) direkt über dem Späneraum (19) verfahren werden kann.

4. Werkzeugmaschine zur spanenden Werkstückbearbeitung nach Patentanspruch 1,
**dadurch gekennzeichnet dass**
die Werkzeugmaschine einen fliegend gelagerten verfahrbaren NC-Schwenkrundtisch (30) zur 5-Achsenbearbeitung mit einer Konsole (34) zum Tragen einer Werkstückpalette aufweist, dessen Schlitten über Führungsschuhe (14a, 15a) auf der ersten und der zweiten Führungsschienen (14, 15) geführt ist und den Linearmotor (17) in Breitenrichtung überdeckt.

5. Werkzeugmaschine zur spanenden Werkstückbearbeitung nach einem der vorhergehenden Patentansprüche,
**dadurch gekennzeichnet dass**
am Boden des kanalförmigen Späneraums (19) in Längsrichtung eine Späneschnecke (50) zur Abfuhr von Spänen angeordnet ist.

6. Werkzeugmaschine zur spanenden Werkstückbearbeitung nach einem der vorhergehenden Patentansprüche,
**dadurch gekennzeichnet dass**
das Maschinenbett (4) einteilig mit 3-Punktauflage ausgebildet ist.

7. Werkzeugmaschine zur spanenden Werkstückbearbeitung nach einem der vorhergehenden Patentansprüche,
**dadurch gekennzeichnet dass**
seitlich an dem Werkstücktisch (16; 30) winkelförmige Leitbleche (25a, 25b) fixiert sind die tischunterseitig in den kanalförmigen Späneraum (19) ragen.

8. Werkzeugmaschine zur spanenden Werkstückbearbeitung nach Patentanspruch 4,
**dadurch gekennzeichnet dass**
der Schwenkrundtisch (30) eine Schwenkachse mit einem Schwenkwinkel von mindestens 180° aufweist, sodass der Werkstücktisch (30) in eine Überkopfstellung gebracht werden kann, bei der ein auf dem Schwenkrundtisch (30) aufgespanntes Werkstück direkt über dem kanalförmigen Späneraum (19) positioniert ist.

9. Werkzeugmaschine zur spanenden Werkstückbearbeitung nach einem der vorhergehenden Patentansprüche,
**dadurch gekennzeichnet**, das
an dem Maschinenständer drei vertikale Führungen (8, 9, 10) vorgesehen sind, entlang derer die Arbeitsspindel (11) geführt ist, wobei die mittlere Führung (9) die Belastung trägt, die durch die magnetischen Kraft eines Linearmotors (29), der zum Verfahren der Arbeitsspindel in vertikaler Richtung vorgesehen ist, erzeugt wird.

## Claims

1. A machine tool for machining a workpiece, comprising
a dimensionally stable machine stand,
a workholding spindle (12) drivingly displaceable in guides (6-10) on said machine stand along two coordinate axes (X, Z) for receiving a machining tool,
a machine bed (2) arranged on an end side of said machine stand (5) on the upper surface of which a horizontal linear guide (13-15) for a workpiece table (16) is arranged, and
a linear motor (17) for displacing a workpiece table (16) in said horizontal linear guide (13-15) along a further coordinate axis (Y), wherein
a channel-shaped chip room (19) for collecting chips arising during the machining of said workpiece is integrated into said upper surface of said machine bed (2), the longitudinal axis of which extends in the direction of said further coordinate axis (Y),
**characterized in that** said linear motor (17) is arranged on said upper surface of said machine bed (2) laterally parallel to said channel-shaped chip room (19), wherein
a first guiding rail (14) of said horizontal linear guide (13-15) for guiding said workpiece table is arranged on a first side of said linear motor (17),
a second guiding rail (15) of said horizontal linear guide (13-15) for guiding said workpiece table is arranged on a second side of said linear motor being opposed to said first side of said linear motor (17), and
said first and said second guiding rail (14, 15) are arranged on a first side of said channel-shaped chip room (19).

2. The machine tool for machining a workpiece according to patent claim 1,
**characterized in that**
on said upper surface of said machine bed a third guiding rail (13) of said horizontal linear guide is arranged on the side of said channel-shaped chip room (19) being opposed with respect to both said other guide rails (14, 15).

3. The machine tool for machining a workpiece according to patent claim 2,
**characterized in that**
said machine tool comprises a displaceable NC round table (16), the carriage (18) of which is guided via guiding shoes (13a-15a) on said three guiding rails (13-15) of said horizontal linear guide and spans said chip room (19) in the width direction such that said NC round table is displaceable by said linear motor (17) directly above said chip room (19).

4. The machine tool for machining a workpiece according to patent claim 1,
**characterized in that**
said machine tool comprises an unsupportedly born NC pivoting round table (30) for machining along 5-axes having a console (34) for supporting a workpiece pallet, the carriage of which is guided via guiding shoes (14a, 15a) on said first and said second guiding rail (14, 15) and spans said linear motor (17) in the width direction.

5. The machine tool for machining a workpiece according to one of the preceding patent claims,
**characterized in that**
a chip worm (50) for removing chips is arranged on the bottom of said channel-shaped chip room (19).

6. The machine tool for machining a workpiece according to one of the preceding patent claims,
**characterized in that**
said machine bed (4) is integrally formed with a 3-point base.

7. The machine tool for machining a workpiece according to one of the preceding patent claims,
**characterized in that**
bracket-shaped directional baffles (25a, 25b) are fixed laterally with respect to said workpiece table (16; 30) such that they protrude into said channel-shaped chip room (19) beneath said table.

8. The machine tool for machining a workpiece according to patent claim 4,
**characterized in that**
said pivoting round table (30) comprises a pivot axis having a pivot range of at least 180° such that said workpiece table (30) can be brought into an overhead position in which a workpiece mounted on said pivoting round table (30) is directly positioned above said channel-shaped chip room (19).

9. The machine tool for machining a workpiece according to one of the preceding patent claims,
**characterized in that**
three vertical guides (8, 9, 10) are provided on said machine stand along which said workholding spindle (11) is guided, wherein the center guide (9) carries the load generated by the magnetic force of a linear motor (29) which is provided for displacing said workholding spindle in the vertical direction.

## Revendications

1. Machine-outil pour l'usinage de pièces à usiner, comportant
un montant de machine rigide en forme,
une broche de travail (12) déplaçable par moteur selon deux axes de coordonnées (X, Z) dans des guidages (6 - 10) sur le montant de la machine et destinée à recevoir un outil d'usinage,
un bâti de machine (2) agencé sur la face frontale du montant de machine (5), sur la face supérieure duquel est agencé un guidage linéaire horizontal (13 - 15) pour une table porte-pièce (16), et
un moteur linéaire (17) pour déplacer une table porte-pièce (16) dans le guidage linéaire horizontal (13 - 15) selon un autre axe de coordonnées (Y),
dans laquelle
un espace de collecte de copeaux (19) en forme de canal est intégré dans la face supérieure du bâti de machine (2) pour collecter des copeaux qui résultent lors de l'usinage de la pièce, espace dont l'axe longitudinal s'étend en direction de l'autre axe de coordonnées (Y),
**caractérisée en ce que**
le moteur linéaire (17) est agencé sur la face supérieure du bâti de machine (2) latéralement et parallèlement à l'espace de collecte de copeaux (19) en forme de canal,
un premier rail de guidage (14) du guidage linéaire horizontal (13 - 15) destiné à guider la table porte-pièce est agencé sur un premier côté du moteur linéaire (17),
un second rail de guidage (15) du guidage linéaire horizontal (13 - 15) destiné à guider la table porte-pièce est agencé sur un second côté du moteur linéaire opposé au premier côté du moteur linéaire (17), et
le premier et le second rails de guidage (14, 15) sont agencés sur un premier côté de l'espace à copeaux (19) en forme de canal.

2. Machine-outil pour l'usinage de pièces à usiner selon la revendication 1, **caractérisée en ce que**
sur le côté supérieur du bâti de machine, un troisième rail de guidage (13) du guidage linéaire horizontal est agencé sur le côté de l'espace à copeaux (19) en forme de canal situé à l'opposé par rapport aux deux autres rails de guidage (14, 15).

3. Machine-outil pour l'usinage de pièces à usiner selon la revendication 2, **caractérisée en ce que**
la machine-outil comprend une table circulaire déplaçable (16) à commande numérique, dont le chariot (18) est guidé sur des patins de guidage (13a - 15a) sur les trois rails de guidage (13 - 15) du guidage linéaire horizontal et coiffe l'espace à copeaux (19) dans la direction de la largeur, de telle sorte que la table circulaire à commande numérique peut être déplacée directement au-dessus de l'espace à copeaux (19) par le moteur linéaire (17).

4. Machine-outil pour l'usinage de pièces à usiner selon la revendication 1, **caractérisée en ce que**
la machine-outil comprend une table circulaire pivotante (30) à commande numérique montée en porte-à-faux pour l'usinage à 5 axes, comportant une console (34) destinée à porter une palette porte-pièce, dont le chariot est guidé sur le premier et sur le second rails de guidage (14, 15) au moyen de patins de guidage (14a, 15a) et coiffe le moteur linéaire (17) dans la direction de la largeur.

5. Machine-outil pour l'usinage de pièces à usiner selon l'une des revendications précédentes,
**caractérisée en ce que**
une vis à copeaux (50) destinée à évacuer des copeaux est agencée en direction longitudinale au fond de l'espace à copeaux (19) en forme de canal.

6. Machine-outil pour l'usinage de pièces à usiner selon l'une des revendications précédentes,
**caractérisée en ce que**
le bâti de machine (4) est réalisé d'un seul tenant avec un support à 3 points.

7. Machine-outil pour l'usinage de pièces à usiner selon l'une des revendications précédentes,
**caractérisée en ce que**
des tôles de guidage (25a, 25b) de forme angulaire sont fixées latéralement sur la table porte-pièce (16 ; 30) qui, du côté inférieur de la table, pénètrent dans l'espace à copeaux (19) en forme de canal.

8. Machine-outil pour l'usinage de pièces à usiner selon la revendication 4,
**caractérisée en ce que**
la table circulaire pivotante (30) présente un axe de pivotement d'un angle de pivotement d'au moins 180°, de telle sorte que la table porte-pièce (30) peut être amenée dans une position renversée dans laquelle une pièce à usiner serrée sur la table circulaire pivotante (30) est positionnée directement au-dessus de l'espace à copeaux (19) en forme de canal.

9. Machine-outil pour l'usinage de pièces à usiner selon l'une des revendications précédentes,
**caractérisée en ce que**
trois guidages verticaux (8, 9, 10) sont prévus sur le montant de machine, le long desquels est guidée la broche de travail (11), le guidage central (9) supportant la charge engendrée par la force magnétique d'un moteur linéaire (29) prévu pour déplacer la broche de travail dans la direction verticale.
